# EUROPEAN PATENT APPLICATION

(11) **EP 2 868 706 A1**
(43) Date of publication of application: **06.05.2015**
(21) Application number: 13190647.1
(22) Date of filing: 29.10.2013
(51) Int. Cl.: C09B 35/56, C09D 11/00, D21H 21/28

(54) **Metal free acid dyes, methods for the production thereof and their use**

(71) Applicant: DyStar Colours Distribution GmbH, 65479 Raunheim (DE)
(72) Inventor: Barbieru, Roxana, Singapore 117468 (SG); Vajiravelu, Sivamurugan, Singapore 120515 (SG); Loh, Wei, Tian, Singapore 768434 (SG)

(57) **Abstract**

Dyes according to formula (1): 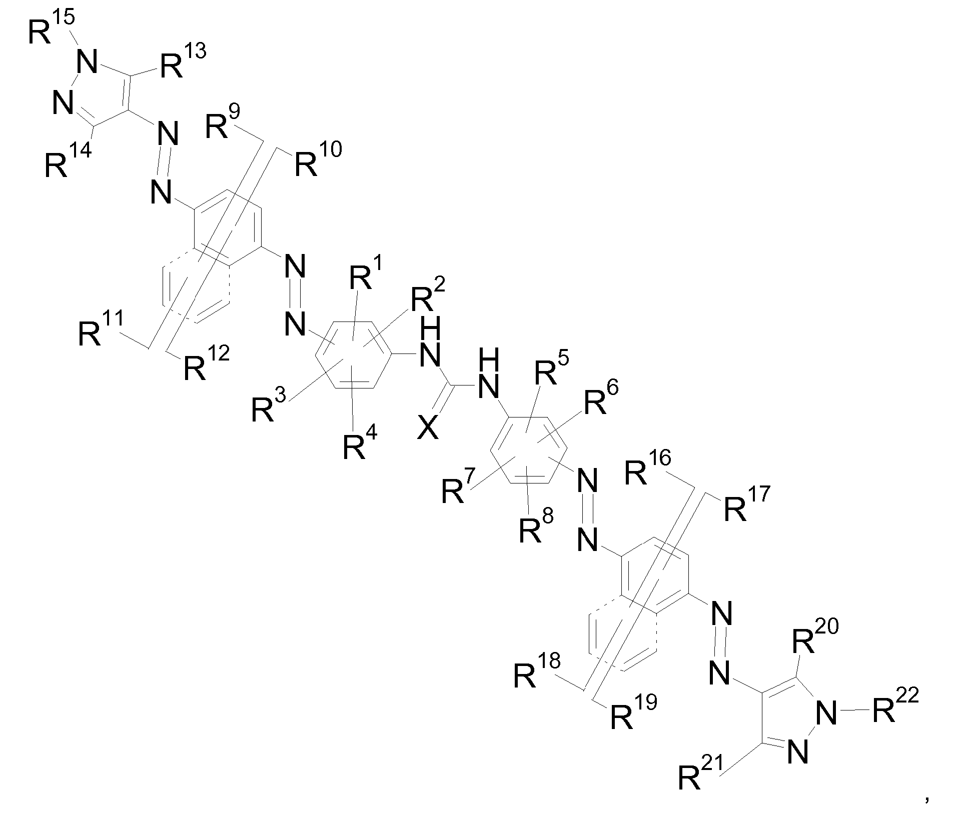 the production and use thereof.

## Description

The present invention relates to the technical field of dyestuffs for dyeing and printing of hydroxyl- and/or carboxamido-containing material.

Acid dyes with amino pyrazolone couplers are known from prior art and can be used as colorants in different applications, see for example US 5,543,259, JP 60215082 A and WO 2005/018931 A1.

However, in the context of the dyeing and printing of hydroxyl-, amino and/or carboxamido-containing material the known dyes have a number of technical disadvantages, which require improvement.

Surprisingly, it has now been found that the dyes of the formula (1) as described below show highly advantageous properties over the known dyes. These include high tinctorial strength with high brilliancy as well as high fastness properties such as wash, contact and light fastness on the materials mentioned above, on blends containing them as well as on microfibres. Most importantly, dyes of formula (1) are metal free and provide dyeings that are levelled.

The present invention refers to dyes of formula (1) 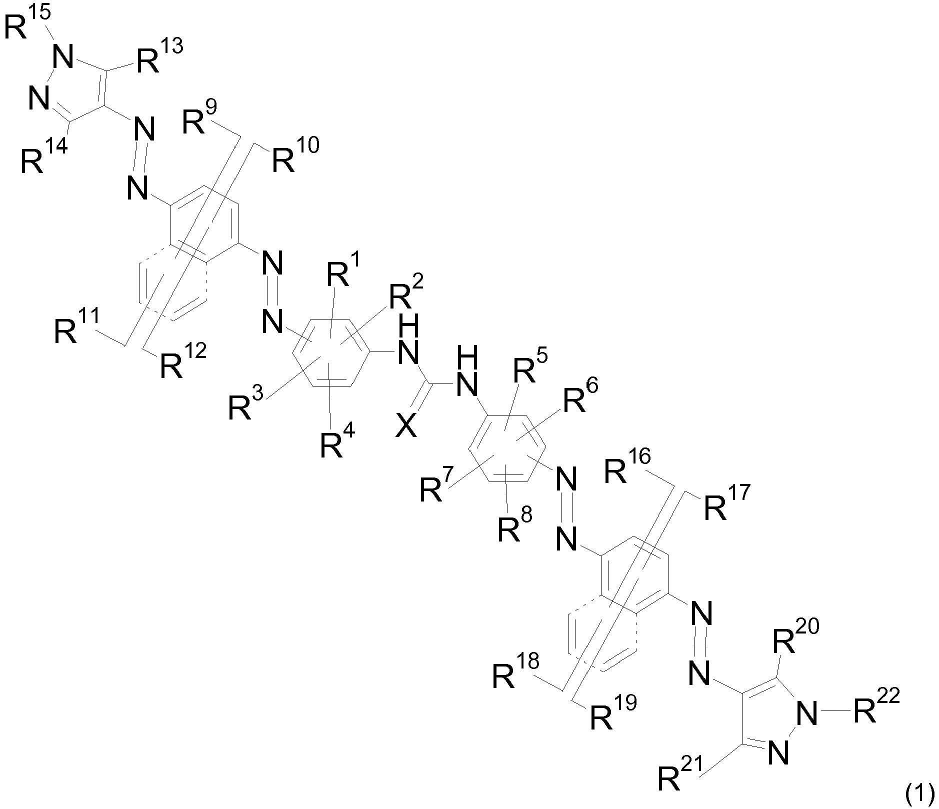 wherein
R¹, R², R³, R⁴, R⁵, R⁶, R⁷ and R⁸ independent of each other is hydrogen, alkyl, alkoxy, halogen, trifluoromethyl or SO₃M
   - whereby at least two of them are SO₃M,
X is oxygen, sulphur or nitrogen,
R⁹, R¹⁰, R¹¹, R¹², R¹⁶, R¹⁷, R¹⁸, R¹⁹ independent of each other is hydrogen, alkyl, substituted alkyl, alkyl interrupted by one or two heteroatoms, alkoxy, substituted alkoxy, halogen, trifluoromethyl, cycloalkyl, heterocycloalkyl, cyano, acyloxy, alkylcarbonyl, acylamino, alkylsulfonylamino, amino, monoalkyl-amino, monocycloalkyl-amino, dialkyl-amino, di(cyclo)alkyl-amino, alkylthio, alkylsulfonyl, alkoxycarbonyl, carbamoyl, sulfamoyl, ureido, alkylureido or -SO₃M,
R¹³ and R²⁰ is hydroxyl,
R¹⁴ and R²¹ independent of each other is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio, alkylcarbonyl, alkylsulfonyl
   or
   is alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido and phenylureido,
R¹⁵ and R²² independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyalkylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl
   or
   alkyl interrupted by one or more heteroatoms, preferably selected from the group consisting of oxygen and sulphur,
   or
   alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
   or
   alkyl interrupted by one or more heteroatoms, preferably selected from the group consisting of oxygen and sulphur, and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M, or
   aryl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M,
M is hydrogen, an alkali metal, ammonium, one equivalent of an alkali earth metal, or a monovalent organic cation,
the dyes of formula (1) have two to six sulfonic acid groups.

This invention referrs to all tautomeric and geometric isomers of the dyes of formula (1) and mixtures thereof.

Alkyl groups appearing in this application may be straight-chain or branched and are (C₁-C₁₂)-alkyl groups, preferably (C₁-C₈)-alkyl groups, for example n-butyl, isobutyl, n-pentyl, isopentyl, n-hexyl, 2-ethylhexyl, sec-butyl, tert-butyl and methylbutyl.

The same applies to alkoxy groups, which accordingly are preferably (C₁-C₈)-alkoxy, for example methoxy and ethoxy, to thioalkoxy groups, which are preferably (C₁-C₈)-thioalkoxy, for example -SCH₃ and -SC₂H₅.

Cycloalkyl groups are preferably (C₃-C₈)-cycloalkyl and especially preferably cyclopentyl or cyclohexyl. The term cyloalkyl comprises for the purpose of the present invention substituted cycloalklyl groups and unsatured cycloalkyl groups as well. A preferred group of this type is cyclopentenyl. Preferred substituents are alkyl, hydroxyalkyl, halogen, hydroxyl, alkoxy, acyl, cyano, nitro, amino, monoalkylamino, dialkylamino, mono(hydroxyalkyl)amino, bis-(hydroxyalkyl)amino, monoalkyl-mono(hydroxyalkyl)amino, carbamoyl, sulfamoyl, acylamino, ureido, aminosulfonylamino, alkoxycarbonyl and acyloxy.

Alkenyl groups may be straight-chain or branched and are preferably (C₂-C₆)-groups for example vinyl and allyl. The term alkenyl comprises for the purpose of the present invention alkynyl groups as well, for example ethynyl and propargyl.

Aryl groups appearing in this invention are preferably phenyl or naphthyl. The terms phenyl and naphthyl comprise unsubstituted as well as substituted phenyl and naphthyl. Preferred substituents are alkyl, cycloalkyl, heterocycloalkyl, hydroxyalkyl, halogen, hydroxyl, alkoxy, alkylthio, acyl, nitro, cyano, amino, monoalkylamino, dialkylamino, mono(hydroxyalkyl)amino, bis-(hydroxyalkyl)amino, monoalkyl-mono(hydroxyalkyl)amino, carbamoyl, sulfamoyl, acylamino, ureido, aminosulfonylamino, alkoxycarbonyl and acyloxy.

Heteroaryl groups are preferably pyridine, pyrimidine, pyridazine, pyrazine, pyrrole, imidazole, pyrazole, 1,2,4-thiadiazole, 1,2,4-triazole, tetrazole, thiophene, thiazole, isothiazole, benzothiazole, benzoisothiazole, 1,3,4-thiadiazole, furane, oxazole, benzoxazole or isoxazole. The terms heteroayl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, ureido, aminosulfonylamino, alkoxycarbonyl and acyloxy.

Heterocycloalkyl groups are preferably pyrrolidine, piperidine, morpholine, tetrahydrofuran or piperazine. The term heterocycloalkyl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, amino-carbonylamino, aminosulfonylamino, alkoxycarbonyl and acyloxy.

Halogen is preferably chlorine, bromine or fluorine.

M is preferably hydrogen, lithium, sodium, potassium or mono-, di-, tri- or tetra-(C₁-C₄)-alkylammonium.

Particularly preferred embodiments of the present invention are dyes of formula (1 a) 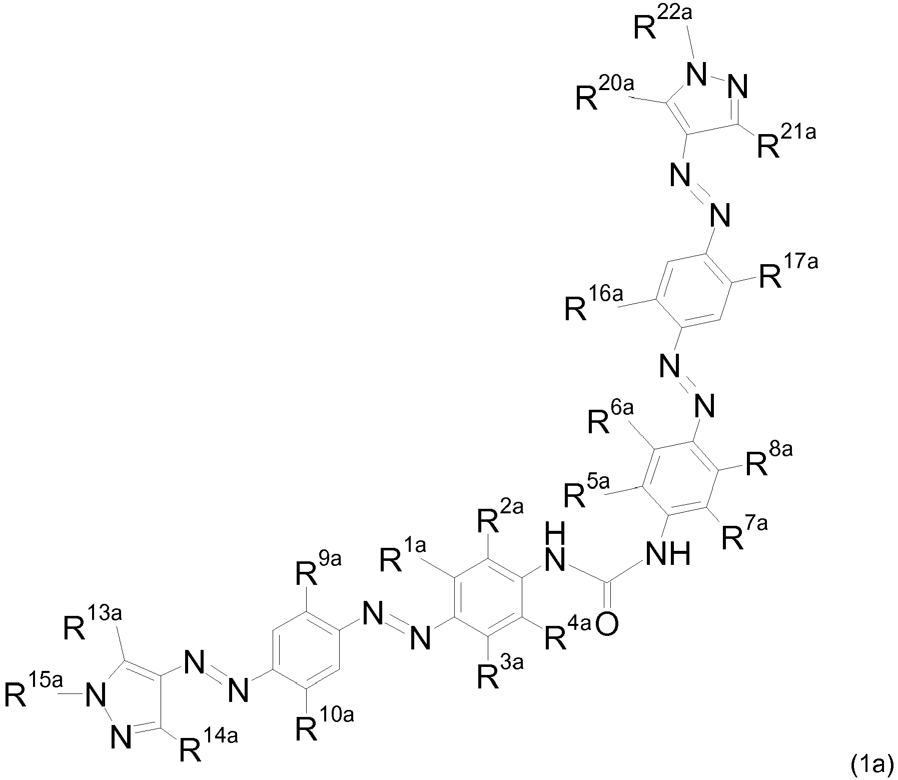 wherein
R^{1a}, R^{2a}, R^{3a}, R^{4a}, R^{5a}, R^{6a}, R^{7a} and R^{8a} independent of each other is hydrogen, alkyl, alkoxy, halogen, trifluoromethyl or SO₃M
   - whereby at least two of them are SO₃M,
R^{9a}, R^{10a}, R^{16a} and R^{17a} independent of each other is hydrogen, alkyl, substituted alkyl, alkyl chain interrupted by one or two heteroatoms, alkoxy, substituted alkoxy, halogen, trifluoromethyl, cycloalkyl, heterocycloalkyl, cyano, acyloxy, alkylcarbonyl, acylamino, alkylsulfonylamino, amino, monoalkyl-amino, monocycloalkyl-amino, dialkyl-amino, di(cyclo)alkyl-amino, alkylthio, alkylsulfonyl, alkoxycarbonyl, carbamoyl, sulfamoyl, ureido, alkylureido or -SO₃M,
R^{13a} and R^{20a} is hydroxyl,
R^{14a} and R^{21a} independent of each other is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio, alkylcarbonyl, alkylsulfonyl
   or
   is alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido and phenylureido,
R^{15a} and R^{22a} independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl
   or
   alkyl interrupted by one or more heteroatoms, preferably selected from the group consisting of oxygen and sulfur
   or
   alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
   or
   alkyl interrupted by one or more heteroatoms, preferably selected from the group consisting of oxygen and sulphur, and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
   or
   aryl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
   and
   M is hydrogen, an alkali metal, ammonium, one equivalent of an alkali earth metal, or a monovalent organic cation.

In especially preferred dyes of formula (1 a)
R^{1a} and R^{6a} is SO₃M and R^{2a}, R^{3a}, R^{4a} and R^{5a} is hydrogen or
   R^{2a} and R^{5a} is SO₃M and R^{1a}, R^{3a}, R^{4a} and R^{6a} is hydrogen,
R^{9a}, R^{10a}, R^{16a} and R^{17a} independent of each other is hydrogen, (C₁-C₄)-alkyl, (C₁-C₄)-alkoxy, halogen, trifluoromethyl, (C₁-C₄)-acylamino or -SO₃M,
R^{13a} and R^{20a} is hydroxyl,
R^{14a} and R^{21a} independent of each other is alkyl, cycloalkyl, trifluoromethyl, cyano, carbamoyl, alkoxycarbonyl, COOM, alkylcarbonyl
   or
   is alkyl substituted by one or more substituents selected from the group consisting of hydroxy, alkoxy, halogen, cyano, COOM, alkoxycarbonyl, acyloxy and carbamoyl,
R^{15a} and R^{22a} independent of each other is methyl, ethyl, n-propyl, n-butyl, n-pentyl, n-hexyl, cyclobutyl, cyclopentyl, cyclohexyl, 2-methylcyclohexyl, 3-methylcyclohexyl, isopropyl, sec-butyl, 2-methylbutyl, 1-ethylproyl, 1,2-dimethylpropyl, tert-butyl, 3-methylbutyl, pentan-2-yl, 2-ethylhexyl, 2,2-dimethylpropyl, phenyl, benzyl, 2-hydroxyethyl, 2-methoxyethyl, 3-methoxypropyl, 2-fluoroethyl, 2-chloroethyl, 3-chloropropyl, 2-ethylhexyl, 2-(2-hydroxyethylsulfanyl)-ethyl, 4-(2-hydroxyethansulfonyl)phenyl, 2-(2-hydroxyethoxy)ethyl, 3-(4-hydroxybutoxy)propyl, 3-(2-phenoxy-ethoxy)-propyl, 3-isopropoxy-propyl, 3-ethoxy-propyl, 3-ethoxybutyl, phenyl, 3-methylphenyl, 2-methylphenyl, 3-methylphenyl, 4-methylphenyl, 2-methoxyphenyl, 3-methoxyphenyl, 4-methoxyphenyl, 2-chlorophenyl, 3-chlorophenyl, 4-chlorophenyl, 2-fluorophenyl, 3-fluorophenyl, 4-fluorophenyl or 3-phenylsulfonamide
   and
   M is hydrogen, an alkali metal, ammonium, one equivalent of an alkali earth metal or a monovalent organic cation.

Examples of preferred dyes of formula (1 a) are the compounds of the formulae (1a¹ to 1a³¹²), mixtures and/or tautomers thereof

| Structure | R^{1a} | R^{2a} | R^{5a} | R^{6a} | R^{8a}/ R^{16a} | R^{10a}/ R^{17a} | R^{14a}/ R^{21a} | R^{15a}/ R^{22a} |
|---|---|---|---|---|---|---|---|---|
| 1a¹ | H | SO₃H | SO₃H | H | Methyl | Methyl | Methyl | Methyl |
| 1a² | SO₃H | H | H | SO₃H | | | | |
| 1a³ | H | SO₃H | SO₃H | H | Methyl | Methyl | Methyl | Ethyl |
| 1a⁴ | SO₃H | H | H | SO₃H | | | | |
| 1a⁵ | H | SO₃H | SO₃H | H | Methyl | Methyl | Methyl | Propyl |
| 1a⁶ | SO₃H | H | H | SO₃H | | | | |
| 1a⁷ | H | SO₃H | SO₃H | H | Methyl | Methyl | Methyl | Butyl |
| 1a⁸ | SO₃H | H | H | SO₃H | | | | |
| 1a⁹ | H | SO₃H | SO₃H | H | Methyl | Methyl | Methyl | Pentyl |
| 1a¹⁰ | SO₃H | H | H | SO₃H | | | | |
| 1a¹¹ | H | SO₃H | SO₃H | H | Methyl | Methyl | Methyl | Cyclobutyl |
| 1a¹² | SO₃H | H | H | SO₃H | | | | |
| 1a¹³ | H | SO₃H | SO₃H | H | Methyl | Methyl | Methyl | Cyclopentyl |
| 1a¹⁴ | SO₃H | H | H | SO₃H | | | | |
| 1a¹⁵ | H | SO₃H | SO₃H | H | Methyl | Methyl | Methyl | Cyclohexyl |
| 1a¹⁶ | SO₃H | H | H | SO₃H | | | | |
| 1a¹⁷ | H | SO₃H | SO₃H | H | Methyl | Methyl | Methyl | 2-Methyl cyclohexyl |
| 1a¹⁸ | SO₃H | H | H | SO₃H | | | | |
| 1a¹⁹ | H | SO₃H | SO₃H | H | Methyl | Methyl | Methyl | 3-Methyl cyclohexyl |
| 1a²⁰ | SO₃H | H | H | SO₃H | | | | |
| 1a²¹ | H | SO₃H | SO₃H | H | Methyl | Methyl | Methyl | Isopropyl |
| 1a²² | SO₃H | H | H | SO₃H | | | | |
| 1a²³ | H | SO₃H | SO₃H | H | Methyl | Methyl | Methyl | Sec-butyl |
| 1a²⁴ | SO₃H | H | H | SO₃H | | | | |
| 1a²⁵ | H | SO₃H | SO₃H | H | Methyl | Methyl | Methyl | 2-Methyl butyl |
| 1a²⁶ | SO₃H | H | H | SO₃H | | | | |
| 1a²⁷ | H | SO₃H | SO₃H | H | Methyl | Methyl | Methyl | 1-Ethylpropyl |
| 1a²⁸ | SO₃H | H | H | SO₃H | | | | |
| 1a²⁹ | H | SO₃H | SO₃H | H | Methyl | Methyl | Methyl | 1,2-Dimethyl propyl |
| 1a³⁰ | SO₃H | H | H | SO₃H | | | | |
| 1a³¹ | H | SO₃H | SO₃H | H | Methyl | Methyl | Methyl | Tert-butyl |
| 1a³² | SO₃H | H | H | SO₃H | | | | |
| 1a³³ | H | SO₃H | SO₃H | H | Methyl | Methyl | Methyl | 3-Methyl butyl |
| 1a³⁴ | SO₃H | H | H | SO₃H | | | | |
| 1a³⁵ | H | SO₃H | SO₃H | H | Methyl | Methyl | Methyl | Pentan-2-yl |
| 1a³⁶ | SO₃H | H | H | SO₃H | | | | |
| 1a³⁷ | H | SO₃H | SO₃H | H | Methyl | Methyl | Methyl | 2-Ethylhexyl |
| 1a³⁸ | SO₃H | H | H | SO₃H | | | | |
| 1a³⁹ | H | SO₃H | SO₃H | H | Methyl | Methyl | Methyl | 2,2-Dimethyl propyl |
| 1a⁴⁰ | SO₃H | H | H | SO₃H | | | | |
| 1a⁴¹ | H | SO₃H | SO₃H | H | Methyl | Methyl | Methyl | Phenyl |
| 1a⁴² | SO₃H | H | H | SO₃H | | | | |
| 1a⁴³ | H | SO₃H | SO₃H | H | Methyl | Methyl | Methyl | Benzyl |
| 1a⁴⁴ | SO₃H | H | H | SO₃H | | | | |
| 1a⁴⁵ | H | SO₃H | SO₃H | H | Methyl | F | Methyl | Methyl |
| 1a⁴⁶ | SO₃H | H | H | SO₃H | | | | |
| 1a⁴⁷ | H | SO₃H | SO₃H | H | Methyl | F | Methyl | Ethyl |
| 1a⁴⁸ | SO₃H | H | H | SO₃H | | | | |
| 1a⁴⁹ | H | SO₃H | SO₃H | H | Methyl | F | Methyl | Propyl |
| 1a⁵⁰ | SO₃H | H | H | SO₃H | | | | |
| 1a⁵¹ | H | SO₃H | SO₃H | H | Methyl | F | Methyl | Butyl |
| 1a⁵² | SO₃H | H | H | SO₃H | | | | |
| 1a⁵³ | H | SO₃H | SO₃H | H | Methyl | F | Methyl | Pentyl |
| 1a⁵⁴ | SO₃H | H | H | SO₃H | | | | |
| 1a⁵⁵ | H | SO₃H | SO₃H | H | Methyl | F | Methyl | Cyclobutyl |
| 1a⁵⁶ | SO₃H | H | H | SO₃H | | | | |
| 1a⁵⁷ | H | SO₃H | SO₃H | H | Methyl | F | Methyl | Cyclopentyl |
| 1a⁵⁸ | SO₃H | H | H | SO₃H | | | | |
| 1a⁵⁹ | H | SO₃H | SO₃H | H | Methyl | F | Methyl | Cyclohexyl |
| 1a⁶⁰ | SO₃H | H | H | SO₃H | | | | |
| 1a⁶¹ | H | SO₃H | SO₃H | H | Methyl | F | Methyl | 2-Methyl cyclohexyl |
| 1a⁶² | SO₃H | H | H | SO₃H | | | | |
| 1a⁶³ | H | SO₃H | SO₃H | H | Methyl | F | Methyl | 3-Methyl cyclohexyl |
| 1a⁶⁴ | SO₃H | H | H | SO₃H | | | | |
| 1a⁶⁵ | H | SO₃H | SO₃H | H | Methyl | F | Methyl | Isopropyl |
| 1a⁶⁶ | SO₃H | H | H | SO₃H | | | | |
| 1a⁶⁷ | H | SO₃H | SO₃H | H | Methyl | F | Methyl | Sec-butyl |
| 1a⁶⁸ | SO₃H | H | H | SO₃H | | | | |
| 1a⁶⁹ | H | SO₃H | SO₃H | H | Methyl | F | Methyl | 2-Methyl butyl |
| 1a⁷⁰ | SO₃H | H | H | SO₃H | | | | |
| 1a⁷¹ | H | SO₃H | SO₃H | H | Methyl | F | Methyl | 1-Ethylpropyl |
| 1a⁷² | SO₃H | H | H | SO₃H | | | | |
| 1a⁷³ | H | SO₃H | SO₃H | H | Methyl | F | Methyl | 1,2-Dimethyl propyl |
| 1a⁷⁴ | SO₃H | H | H | SO₃H | | | | |
| 1a⁷⁵ | H | SO₃H | SO₃H | H | Methyl | F | Methyl | Tert-butyl |
| 1a⁷⁶ | SO₃H | H | H | SO₃H | | | | |
| 1a⁷⁷ | H | SO₃H | SO₃H | H | Methyl | F | Methyl | 3-methyl butyl |
| 1a⁷⁸ | SO₃H | H | H | SO₃H | | | | |
| 1a⁷⁹ | H | SO₃H | SO₃H | H | Methyl | F | Methyl | Pentan-2-yl |
| 1a⁸⁰ | SO₃H | H | H | SO₃H | | | | |
| 1a⁸¹ | H | SO₃H | SO₃H | H | Methyl | F | Methyl | 2-Ethylhexyl |
| 1a⁸² | SO₃H | H | H | SO₃H | | | | |
| 1a⁸³ | H | SO₃H | SO₃H | H | Methyl | F | Methyl | 2,2-Dimethyl propyl |
| 1a⁸⁴ | SO₃H | H | H | SO₃H | | | | |
| 1a⁸⁵ | H | SO₃H | SO₃H | H | Methyl | F | Methyl | Phenyl |
| 1a⁸⁶ | SO₃H | H | H | SO₃H | | | | |
| 1a⁸⁷ | H | SO₃H | SO₃H | H | Methyl | F | Methyl | Benzyl |
| 1a⁸⁸ | SO₃H | H | H | SO₃H | | | | |
| 1a⁸⁹ | H | SO₃H | SO₃H | H | NHCOCH₃ | OMe | Methyl | Methyl |
| 1a⁹⁰ | SO₃H | H | H | SO₃H | | | | |
| 1a⁹¹ | H | SO₃H | SO₃H | H | NHCOCH₃ | OMe | Methyl | Ethyl |
| 1a⁹² | SO₃H | H | H | SO₃H | | | | |
| 1a⁹⁶ | H | SO₃H | SO₃H | H | NHCOCH₃ | OMe | Methyl | Propyl |
| 1a⁹⁴ | SO₃H | H | H | SO₃H | | | | |
| 1a⁹⁵ | H | SO₃H | SO₃H | H | NHCOCH₃ | OMe | Methyl | Butyl |
| 1a⁹⁶ | SO₃H | H | H | SO₃H | | | | |
| 1a⁹⁷ | H | SO₃H | SO₃H | H | NHCOCH₃ | OMe | Methyl | Pentyl |
| 1a⁹⁸ | SO₃H | H | H | SO₃H | | | | |
| 1a⁹⁹ | H | SO₃H | SO₃H | H | NHCOCH₃ | OMe | Methyl | Cyclobutyl |
| 1a¹⁰⁰ | SO₃H | H | H | SO₃H | | | | |
| 1a¹⁰¹ | H | SO₃H | SO₃H | H | NHCOCH₃ | OMe | Methyl | Cyclopentyl |
| 1a¹⁰² | SO₃H | H | H | SO₃H | | | | |
| 1a¹⁰³ | H | SO₃H | SO₃H | H | NHCOCH₃ | OMe | Methyl | Cyclohexyl |
| 1a¹⁰⁴ | SO₃H | H | H | SO₃H | | | | |
| 1a¹⁰⁵ | H | SO₃H | SO₃H | H | NHCOCH₃ | OMe | Methyl | 2-Methyl cyclohexyl |
| 1a¹⁰⁶ | SO₃H | H | H | SO₃H | | | | |
| 1a¹⁰⁷ | H | SO₃H | SO₃H | H | NHCOCH₃ | OMe | Methyl | 3-Methyl cyclohexyl |
| 1a¹⁰⁸ | SO₃H | H | H | SO₃H | | | | |
| 1a¹⁰⁹ | H | SO₃H | SO₃H | H | NHCOCH₃ | OMe | Methyl | Isopropyl |
| 1a¹¹⁰ | SO₃H | H | H | SO₃H | | | | |
| 1a¹¹¹ | H | SO₃H | SO₃H | H | NHCOCH₃ | OMe | Methyl | Sec-butyl |
| 1a¹¹² | SO₃H | H | H | SO₃H | | | | |
| 1a¹¹³ | H | SO₃H | SO₃H | H | NHCOCH₃ | OMe | Methyl | 2-Methyl butyl |
| 1a¹¹⁴ | SO₃H | H | H | SO₃H | | | | |
| 1a¹¹⁵ | H | SO₃H | SO₃H | H | NHCOCH₃ | OMe | Methyl | 1-Ethylpropyl |
| 1a¹¹⁶ | SO₃H | H | H | SO₃H | | | | |
| 1a¹¹⁷ | H | SO₃H | SO₃H | H | NHCOCH₃ | OMe | Methyl | 1,2-Dimethyl propyl |
| 1a¹¹⁸ | SO₃H | H | H | SO₃H | | | | |
| 1a¹¹⁹ | H | SO₃H | SO₃H | H | NHCOCH₃ | OMe | Methyl | Tert-butyl |
| 1a¹²⁰ | SO₃H | H | H | SO₃H | | | | |
| 1a¹²¹ | H | SO₃H | SO₃H | H | NHCOCH₃ | OMe | Methyl | 3-Methyl butyl |
| 1a¹²² | SO₃H | H | H | SO₃H | | | | |
| 1a¹²³ | H | SO₃H | SO₃H | H | NHCOCH₃ | OMe | Methyl | Pentan-2-yl |
| 1a¹²⁴ | SO₃H | H | H | SO₃H | | | | |
| 1a¹²⁵ | H | SO₃H | SO₃H | H | NHCOCH₃ | OMe | Methyl | 2-Ethylhexyl |
| 1a¹²⁶ | SO₃H | H | H | SO₃H | | | | |
| 1a¹²⁷ | H | SO₃H | SO₃H | H | NHCOCH₃ | OMe | Methyl | 2,2-Dimethyl propyl |
| 1a¹²⁸ | SO₃H | H | H | SO₃H | | | | |
| 1a¹²⁹ | H | SO₃H | SO₃H | H | NHCOCH₃ | OMe | Methyl | Phenyl |
| 1a¹³⁰ | SO₃H | H | H | SO₃H | | | | |
| 1a¹³¹ | H | SO₃H | SO₃H | H | NHCOCH₃ | OMe | Methyl | Benzyl |
| 1a¹³² | SO₃H | H | H | SO₃H | | | | |
| 1a¹³³ | H | SO₃H | SO₃H | H | Methyl | Methyl | Methyl | 2-Methoxy ethyl |
| 1a¹³⁴ | SO₃H | H | H | SO₃H | | | | |
| 1a¹³⁵ | H | SO₃H | SO₃H | H | Methyl | Methyl | Methyl | 3-Methoxy propyl |
| 1a¹³⁶ | SO₃H | H | H | SO₃H | | | | |
| 1a¹³⁷ | H | SO₃H | SO₃H | H | Methyl | Methyl | Methyl | 2-Hydroxyethyl |
| 1a¹³⁸ | SO₃H | H | H | SO₃H | | | | |
| 1a¹³⁹ | H | SO₃H | SO₃H | H | Methyl | Methyl | Methyl | 2-Fluoroethyl |
| 1a¹⁴⁰ | SO₃H | H | H | SO₃H | | | | |
| 1a¹⁴¹ | H | SO₃H | SO₃H | H | Methyl | Methyl | Methyl | 2-Chloroethyl |
| 1a¹⁴² | SO₃H | H | H | SO₃H | | | | |
| 1a¹⁴³ | H | SO₃H | SO₃H | H | Methyl | Methyl | Methyl | 3-Chloropropyl |
| 1a¹⁴⁴ | SO₃H | H | H | SO₃H | | | | |
| 1a¹⁴⁵ | H | SO₃H | SO₃H | H | Methyl | Methyl | Methyl | 2-Ethylhexyl |
| 1a¹⁴⁶ | SO₃H | H | H | SO₃H | | | | |
| 1a¹⁴⁷ | H | SO₃H | SO₃H | H | Methyl | Methyl | Methyl | 2-(2-Hydroxy-ethyl sulfanyl)-ethyl |
| 1a¹⁴⁸ | SO₃H | H | H | SO₃H | | | | |
| 1a¹⁴⁹ | H | SO₃H | SO₃H | H | Methyl | Methyl | Methyl | 2-(2-Hydroxyethoxy)ethyl |
| 1a¹⁵⁰ | SO₃H | H | H | SO₃H | | | | |
| 1a¹⁵¹ | H | SO₃H | SO₃H | H | Methyl | Methyl | Methyl | 3-(4-Hydroxybutoxy)propyl |
| 1a¹⁵² | SO₃H | H | H | SO₃H | | | | |
| 1a¹⁵³ | H | SO₃H | SO₃H | H | Methyl | Methyl | Methyl | 4-(2-Hydroxyethanesulfonyl)pheny l |
| 1a¹⁵⁴ | SO₃H | H | H | SO₃H | | | | |
| 1a¹⁵⁵ | H | SO₃H | SO₃H | H | Methyl | Methyl | Methyl | 3-Isopropoxy propyl |
| 1a¹⁵⁶ | SO₃H | H | H | SO₃H | | | | |
| 1a¹⁵⁷ | H | SO₃H | SO₃H | H | Methyl | Methyl | Methyl | 3-Ethoxypropyl |
| 1a¹⁵⁸ | SO₃H | H | H | SO₃H | | | | |
| 1a¹⁵⁹ | H | SO₃H | SO₃H | H | Methyl | Methyl | Methyl | 3-Ethoxybutyl |
| 1a¹⁶⁰ | SO₃H | H | H | SO₃H | | | | |
| 1a¹⁶¹ | H | SO₃H | SO₃H | H | Methyl | Methyl | Methyl | 3-Methyl phenyl |
| 1a¹⁶² | SO₃H | H | H | SO₃H | | | | |
| 1a¹⁶³ | H | SO₃H | SO₃H | H | Methyl | Methyl | Methyl | 2-Methyl phenyl |
| 1a¹⁶⁴ | SO₃H | H | H | SO₃H | | | | |
| 1a¹⁶⁵ | H | SO₃H | SO₃H | H | Methyl | Methyl | Methyl | 4-Methyl phenyl |
| 1a¹⁶⁶ | SO₃H | H | H | SO₃H | | | | |
| 1a¹⁶⁷ | H | SO₃H | SO₃H | H | Methyl | Methyl | Methyl | 2-Methoxy phenyl |
| 1a¹⁶⁸ | SO₃H | H | H | SO₃H | | | | |
| 1a¹⁶⁹ | H | SO₃H | SO₃H | H | Methyl | Methyl | Methyl | 3-Methoxy phenyl |
| 1a¹⁷⁰ | SO₃H | H | H | SO₃H | | | | |
| 1a¹⁷¹ | H | SO₃H | SO₃H | H | Methyl | Methyl | Methyl | 4-Methoxy phenyl |
| 1a¹⁷² | SO₃H | H | H | SO₃H | | | | |
| 1a¹⁷³ | H | SO₃H | SO₃H | H | Methyl | Methyl | Methyl | 2-Chlorophenyl |
| 1a¹⁷⁴ | SO₃H | H | H | SO₃H | | | | |
| 1a¹⁷⁵ | H | SO₃H | SO₃H | H | Methyl | Methyl | Methyl | 3-Chlorophenyl |
| 1a¹⁷⁶ | SO₃H | H | H | SO₃H | | | | |
| 1a¹⁷⁷ | H | SO₃H | SO₃H | H | Methyl | Methyl | Methyl | 4-Chlorophenyl |
| 1a¹⁷⁸ | SO₃H | H | H | SO₃H | | | | |
| 1a¹⁷⁹ | H | SO₃H | SO₃H | H | Methyl | Methyl | Methyl | 2-Fluorophenyl |
| 1a¹⁸⁰ | SO₃H | H | H | SO₃H | | | | |
| 1a¹⁸¹ | H | SO₃H | SO₃H | H | Methyl | Methyl | Methyl | 3-Fluorophenyl |
| 1a¹⁸² | SO₃H | H | H | SO₃H | | | | |
| 1a¹⁸³ | H | SO₃H | SO₃H | H | Methyl | Methyl | Methyl | 4-Fluorophenyl |
| 1a¹⁸⁴ | SO₃H | H | H | SO₃H | | | | |
| 1a¹⁸⁵ | H | SO₃H | SO₃H | H | Methyl | Methyl | Methyl | 3-Phenyl sulfonamide |
| 1a¹⁸⁶ | SO₃H | H | H | SO₃H | | | | |
| 1a¹⁸⁷ | H | SO₃H | SO₃H | H | Methyl | Methyl | Methyl | 2-Aminophenyl |
| 1a¹⁸⁸ | SO₃H | H | H | SO₃H | | | | |
| 1a¹⁸⁹ | H | SO₃H | SO₃H | H | Methyl | Methyl | Methyl | 3-Aminophenyl |
| 1a¹⁹⁰ | SO₃H | H | H | SO₃H | | | | |
| 1a¹⁹¹ | H | SO₃H | SO₃H | H | Methyl | Methyl | Methyl | 4-Aminophenyl |
| 1a¹⁹² | SO₃H | H | H | SO₃H | | | | |
| 1a¹⁹³ | H | SO₃H | SO₃H | H | Methyl | F | Methyl | 2-Methoxy ethyl |
| 1a¹⁹⁴ | SO₃H | H | H | SO₃H | | | | |
| 1a¹⁹⁵ | H | SO₃H | SO₃H | H | Methyl | F | Methyl | 3-Methoxy propyl |
| 1a¹⁹⁶ | SO₃H | H | H | SO₃H | | | | |
| 1a¹⁹⁷ | H | SO₃H | SO₃H | H | Methyl | F | Methyl | 2-Hydroxy ethyl |
| 1a¹⁹⁸ | SO₃H | H | H | SO₃H | | | | |
| 1a¹⁹⁹ | H | SO₃H | SO₃H | H | Methyl | F | Methyl | 2-Fluoro ethyl |
| 1a²⁰⁰ | SO₃H | H | H | SO₃H | | | | |
| 1a²⁰¹ | H | SO₃H | SO₃H | H | Methyl | F | Methyl | 2-Chloro ethyl |
| 1a²⁰² | SO₃H | H | H | SO₃H | | | | |
| 1a²⁰³ | H | SO₃H | SO₃H | H | Methyl | F | Methyl | 3-Chloro propyl |
| 1a²⁰⁴ | SO₃H | H | H | SO₃H | | | | |
| 1a²⁰⁵ | H | SO₃H | SO₃H | H | Methyl | F | Methyl | 2-Ethyl hexyl |
| 1a²⁰⁶ | SO₃H | H | H | SO₃H | | | | |
| 1a²⁰⁷ | H | SO₃H | SO₃H | H | Methyl | F | Methyl | 2-(2-Hydroxy-ethyl sulfanyl)-ethyl |
| 1a²⁰⁸ | SO₃H | H | H | SO₃H | | | | |
| 1a²⁰⁹ | H | SO₃H | SO₃H | H | Methyl | F | Methyl | 2-(2-Hydroxyethoxy)ethyl |
| 1a²¹⁰ | SO₃H | H | H | SO₃H | | | | |
| 1a²¹¹ | H | SO₃H | SO₃H | H | Methyl | F | Methyl | 3-(4-Hydroxybutoxy)propyl |
| 1a²¹² | SO₃H | H | H | SO₃H | | | | |
| 1a²¹³ | H | SO₃H | SO₃H | H | Methyl | F | Methyl | 4-(2-Hydroxyethanesulfonyl)phenyl |
| 1a²¹⁴ | SO₃H | H | H | SO₃H | | | | |
| 1a²¹⁵ | H | SO₃H | SO₃H | H | Methyl | F | Methyl | 3-Isopropoxy-propyl |
| 1a²¹⁶ | SO₃H | H | H | SO₃H | | | | |
| 1a²¹⁷ | H | SO₃H | SO₃H | H | Methyl | F | Methyl | 3-Ethoxy-propyl |
| 1a²¹⁸ | SO₃H | H | H | SO₃H | | | | |
| 1a²¹⁹ | H | SO₃H | SO₃H | H | Methyl | F | Methyl | 3-Ethoxy butyl |
| 1a²²⁰ | SO₃H | H | H | SO₃H | | | | |
| 1a²²¹ | H | SO₃H | SO₃H | H | Methyl | F | Methyl | 3-Methyl phenyl |
| 1a²²² | SO₃H | H | H | SO₃H | | | | |
| 1a²²³ | H | SO₃H | SO₃H | H | Methyl | F | Methyl | 2-Methyl phenyl |
| 1a²²⁴ | SO₃H | H | H | SO₃H | | | | |
| 1a²²⁵ | H | SO₃H | SO₃H | H | Methyl | F | Methyl | 4-Methyl phenyl |
| 1a²²⁶ | SO₃H | H | H | SO₃H | | | | |
| 1a²²⁷ | H | SO₃H | SO₃H | H | Methyl | F | Methyl | 2-Methoxy phenyl |
| 1a²²⁸ | SO₃H | H | H | SO₃H | | | | |
| 1a²²⁹ | H | SO₃H | SO₃H | H | Methyl | F | Methyl | 3-Methoxy phenyl |
| 1a²³⁰ | SO₃H | H | H | SO₃H | | | | |
| 1a²³¹ | H | SO₃H | SO₃H | H | Methyl | F | Methyl | 4-Methoxy phenyl |
| 1a²³² | SO₃H | H | H | SO₃H | | | | |
| 1a²³³ | H | SO₃H | SO₃H | H | Methyl | F | Methyl | 2-Chloro phenyl |
| 1a²³⁴ | SO₃H | H | H | SO₃H | | | | |
| 1a²³⁵ | H | SO₃H | SO₃H | H | Methyl | F | Methyl | 3-Chloro phenyl |
| 1a²³⁶ | SO₃H | H | H | SO₃H | | | | |
| 1a²³⁷ | H | SO₃H | SO₃H | H | Methyl | F | Methyl | 4-Chloro phenyl |
| 1a²³⁸ | SO₃H | H | H | SO₃H | | | | |
| 1a²³⁹ | H | SO₃H | SO₃H | H | Methyl | F | Methyl | 2-Fluoro phenyl |
| 1a²⁴⁰ | SO₃H | H | H | SO₃H | | | | |
| 1a²⁴¹ | H | SO₃H | SO₃H | H | Methyl | F | Methyl | 3-Fluoro phenyl |
| 1a²⁴² | SO₃H | H | H | SO₃H | | | | |
| 1a²⁴³ | H | SO₃H | SO₃H | H | Methyl | F | Methyl | 4-Fluoro phenyl |
| 1a²⁴⁴ | SO₃H | H | H | SO₃H | | | | |
| 1a²⁴⁵ | H | SO₃H | SO₃H | H | Methyl | F | Methyl | 3-Phenyl sulfonamide |
| 1a²⁴⁶ | SO₃H | H | H | SO₃H | | | | |
| 1a²⁴⁷ | H | SO₃H | SO₃H | H | Methyl | F | Methyl | 2-Amino phenyl |
| 1a²⁴⁸ | SO₃H | H | H | SO₃H | | | | |
| 1a²⁴⁹ | H | SO₃H | SO₃H | H | Methyl | F | Methyl | 3-Amino phenyl |
| 1a²⁵⁰ | SO₃H | H | H | SO₃H | | | | |
| 1a²⁶⁰ | H | SO₃H | SO₃H | H | Methyl | F | Methyl | 4-Amino phenyl |
| 1a²⁵² | SO₃H | H | H | SO₃H | | | | |
| 1a²⁵³ | H | SO₃H | SO₃H | H | NHCOCH₃ | OMe | Methyl | 2-Methoxy ethyl |
| 1a²⁵⁴ | SO₃H | H | H | SO₃H | | | | |
| 1a²⁵⁵ | H | SO₃H | SO₃H | H | NHCOCH₃ | OMe | Methyl | 3-Methoxy propyl |
| 1a²⁵⁶ | SO₃H | H | H | SO₃H | | | | |
| 1a²⁵⁷ | H | SO₃H | SO₃H | H | NHCOCH₃ | OMe | Methyl | 2-Hydroxy ethyl |
| 1a²⁵⁸ | SO₃H | H | H | SO₃H | | | | |
| 1a²⁵⁹ | H | SO₃H | SO₃H | H | NHCOCH₃ | OMe | Methyl | 2-Fluoro ethyl |
| 1a²⁶⁰ | SO₃H | H | H | SO₃H | | | | |
| 1a²⁶¹ | H | SO₃H | SO₃H | H | NHCOCH₃ | OMe | Methyl | 2-Chloro ethyl |
| 1a²⁶² | SO₃H | H | H | SO₃H | | | | |
| 1a²⁶³ | H | SO₃H | SO₃H | H | NHCOCH₃ | OMe | Methyl | 3-Chloro propyl |
| 1a²⁶⁴ | SO₃H | H | H | SO₃H | | | | |
| 1a²⁶⁵ | H | SO₃H | SO₃H | H | NHCOCH₃ | OMe | Methyl | 2-Ethyl hexyl |
| 1a²⁶⁶ | SO₃H | H | H | SO₃H | | | | |
| 1a²⁶⁷ | H | SO₃H | SO₃H | H | NHCOCH₃ | OMe | Methyl | 2-(2-Hydroxy-ethyl sulfanyl)-ethyl |
| 1a²⁶⁸ | SO₃H | H | H | SO₃H | | | | |
| 1a²⁶⁹ | H | SO₃H | SO₃H | H | NHCOCH₃ | OMe | Methyl | 2-(2-Hydroxyethoxy)ethyl |
| 1a²⁷⁰ | SO₃H | H | H | SO₃H | | | | |
| 1a²⁷¹ | H | SO₃H | SO₃H | H | NHCOCH₃ | OMe | Methyl | 3-(4-Hydroxybutoxy)propyl |
| 1a²⁷² | SO₃H | H | H | SO₃H | | | | |
| 1a²⁷³ | H | SO₃H | SO₃H | H | NHCOCH₃ | OMe | Methyl | 4-(2-Hydroxyethane-sulfonyl)phenyl |
| 1a²⁷⁴ | SO₃H | H | H | SO₃H | | | | |
| 1a²⁷⁵ | H | SO₃H | SO₃H | H | NHCOCH₃ | OMe | Methyl | 3-Isopropoxy-propyl |
| 1a²⁷⁶ | SO₃H | H | H | SO₃H | | | | |
| 1a²⁷⁷ | H | SO₃H | SO₃H | H | NHCOCH₃ | OMe | Methyl | 3-Ethoxy-propyl |
| 1a²⁷⁸ | SO₃H | H | H | SO₃H | | | | |
| 1a²⁷⁹ | H | SO₃H | SO₃H | H | NHCOCH₃ | OMe | Methyl | 3-Ethoxy butyl |
| 1a²⁸⁰ | SO₃H | H | H | SO₃H | | | | |
| 1a²⁸¹ | H | SO₃H | SO₃H | H | NHCOCH₃ | OMe | Methyl | 3-Methyl phenyl |
| 1a²⁸² | SO₃H | H | H | SO₃H | | | | |
| 1a²⁸³ | H | SO₃H | SO₃H | H | NHCOCH₃ | OMe | Methyl | 2-Methyl phenyl |
| 1a²⁸⁴ | SO₃H | H | H | SO₃H | | | | |
| 1a²⁸⁵ | H | SO₃H | SO₃H | H | NHCOCH₃ | OMe | Methyl | 4-Methyl phenyl |
| 1a²⁸⁶ | SO₃H | H | H | SO₃H | | | | |
| 1a²⁸⁷ | H | SO₃H | SO₃H | H | NHCOCH₃ | OMe | Methyl | 2-Methoxy phenyl |
| 1a²⁸⁸ | SO₃H | H | H | SO₃H | | | | |
| 1a²⁸⁹ | H | SO₃H | SO₃H | H | NHCOCH₃ | OMe | Methyl | 3-Methoxy phenyl |
| 1a²⁹⁰ | SO₃H | H | H | SO₃H | | | | |
| 1a²⁹¹ | H | SO₃H | SO₃H | H | NHCOCH₃ | OMe | Methyl | 4-Methoxy phenyl |
| 1a²⁹² | SO₃H | H | H | SO₃H | | | | |
| 1a²⁹³ | H | SO₃H | SO₃H | H | NHCOCH₃ | OMe | Methyl | 2-Chloro phenyl |
| 1a²⁹⁴ | SO₃H | H | H | SO₃H | | | | |
| 1a²⁹⁵ | H | SO₃H | SO₃H | H | NHCOCH₃ | OMe | Methyl | 3-Chloro phenyl |
| 1a²⁹⁶ | SO₃H | H | H | SO₃H | | | | |
| 1a²⁹⁷ | H | SO₃H | SO₃H | H | NHCOCH₃ | OMe | Methyl | 4-Chloro phenyl |
| 1a²⁹⁸ | SO₃H | H | H | SO₃H | | | | |
| 1a²⁹⁹ | H | SO₃H | SO₃H | H | NHCOCH₃ | OMe | Methyl | 2-Fluoro phenyl |
| 1a³⁰⁰ | SO₃H | H | H | SO₃H | | | | |
| 1a³⁰¹ | H | SO₃H | SO₃H | H | NHCOCH₃ | OMe | Methyl | 3-Fluoro phenyl |
| 1a³⁰² | SO₃H | H | H | SO₃H | | | | |
| 1a³⁰³ | H | SO₃H | SO₃H | H | NHCOCH₃ | OMe | Methyl | 4-Fluoro phenyl |
| 1a³⁰⁴ | SO₃H | H | H | SO₃H | | | | |
| 1a³⁰⁵ | H | SO₃H | SO₃H | H | NHCOCH₃ | OMe | Methyl | 3-Phenyl sulfonamide |
| 1a³⁰⁶ | SO₃H | H | H | SO₃H | | | | |
| 1a³⁰⁷ | H | SO₃H | SO₃H | H | NHCOCH₃ | OMe | Methyl | 2-Amino phenyl |
| 1a³⁰⁸ | SO₃H | H | H | SO₃H | | | | |
| 1a³⁰⁹ | H | SO₃H | SO₃H | H | NHCOCH₃ | OMe | Methyl | 3-Amino phenyl |
| 1a³¹⁰ | SO₃H | H | H | SO₃H | | | | |
| 1a³¹¹ | H | SO₃H | SO₃H | H | NHCOCH₃ | OMe | Methyl | 4-Amino phenyl |
| 1a³¹² | SO₃H | H | H | SO₃H | | | | |

The present invention also provides a process for the production of dyes of formula (1) and mixtures thereof comprising
a) diazotization of a compound of formula (2) 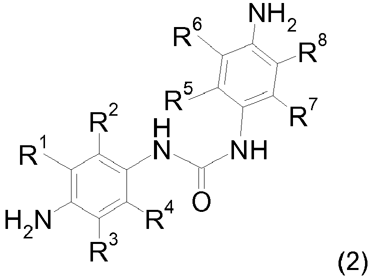 wherein R¹ to R⁸ are defined as above,
b) reacting the diazonium salt obtained in a) with compounds of formula (3) and (4) in stoichiometric amounts 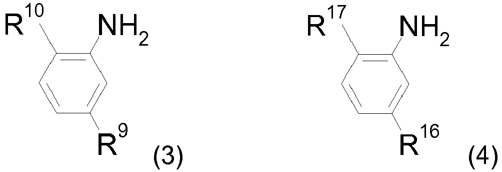 wherein R⁹, R¹⁰ and R¹⁶, R¹⁷ are defined as above, to give an intermediate of formula (5) 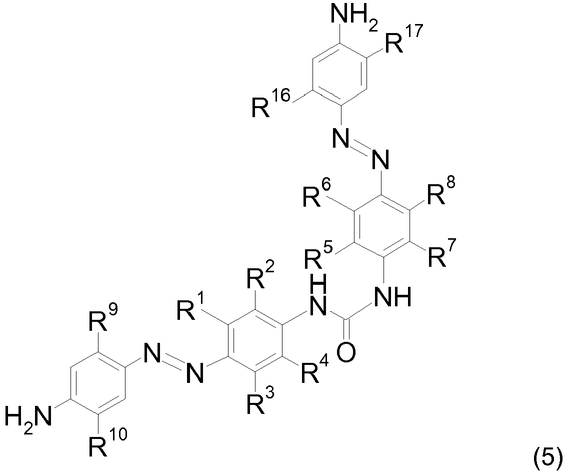
c) diazotizing the intermediate of formula (5) and
d) reacting the diazonium salt(s) obtained in c) with compounds of formula (6) and (7) or mixtures thereof in stoichiometric amounts 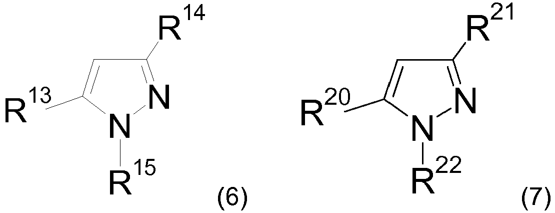 wherein R¹³ to R²² are defined as above.

The diazotization of the compounds of formula (2) and (5), respectively can be performed by means of diazotization methods that are known to a person skilled in the art, preferably by using sodium nitrite or nitrosylsulfuric acid in acidic medium using inorganic acids such as hydrochloric acid, sulfuric acid or phosphoric acid or mixtures thereof or organic acids such as acetic acid or propionic acid or mixtures thereof. Also mixtures of inorganic acid with organic acids can be advantageously used.

The coupling reaction of the diazonium salts obtained by diazotization of the compound of the formula (2) onto the compounds of formulae (3) and (4) as well as the coupling reaction of the the diazonium salts obtained by diazotization of the compound of the formula (5) onto the compounds of formulae (6) and (7) can likewise be performed by known methods.

The compounds of the formula (2) are known and commercially available or can be synthesised by means of common chemical reactions known to a person skilled in the art such as the methods disclosed in DE140613C.

The pyrazolones of formula (6) and (7) in which R¹³ and R¹⁶ denote hydroxy are commercially available or can be synthesized via methods disclosed in the literature such as WO 2010/076553. Through analogy, all the pyrazolones that are used in this invention can be synthesized as described.

The dyes of the present invention are suitable for dyeing and printing of natural, manufactured regenerated, modified or synthetic hydroxyl- amino-, and/or carboxamido-containing fiber materials and their blends by the application methods numerously described in the art for acid dyes.

Therefore, the present invention also provides a process for dyeing and printing of the above-mentioned fiber materials and their blends in which a dye or a dye mixture according to the present invention is used.

Examples of natural fibre materials as described above are vegetable fibres such as seed fibres i.e. cotton, kapok, coir from coconut husk, bast fibers i.e. cotton, flax, hemp, jute, kenaf, ramie, rattan, leaf fibres i.e. sisal, henequen, banana, stalk fibres i.e. bamboo, and fibres from animals such as wool, silk, cashmere wool, alpaca fiber, mohair, Angora fibre as well as fur and leather materials.

Examples of manufactured and manufactured regenerated fibres are cellulosic fibres such as paper and cellulosic regenerated fibres such as viscose rayon fibres, acetate and triacetate fibers and Lyocell fibers.

Examples of synthetic fiber materials as described above are nylon materials, like nylon-6 and nylon-6.6 and aramid fibres.

The above-mentioned substrates to be dyed can be present in various forms such as but not limited to yarn, woven fabric, loop-formingly knitted fabric or carpet.

The dyes of the present invention and their salts or mixtures can be used as a single dyeing colorant in dyeing or printing processes or it can be part of a di-/tri- or multi-component combination colorant in dyeing or in printing compositions. The di-/tri- or multi-component shade dyeings show similar fastness level as compared to dyeing performed with a single colorant component.

Dyes of this invention and their salts or mixtures are highly compatible with other known and/or commercially available acid dyes and they can be used together with such dyes of related chromophores and similar technical performance to obtain specific hues. Similar technical performance includes, comparable build-up, comparable fastness properties and comparable exhaustion rates during dyeings.

The dyes of the present invention can also be used in digital printing processes, in particular in digital textile printing. Aqueous inks for digital printing which comprise a dye of the present invention likewise form part of the subject matter of the present invention.

The inks of the present invention comprise the dye of the present invention in amounts which preferably range from 0.1 % by weight to 50 % by weight, more preferably from 0.5 % by weight to 30 % by weight and most preferably from 1 % by weight to 15 % by weight, based on the total weight of the ink.
The inks, as well as the dye of the present invention, may if desired contain further dyes used in digital printing.
For the inks of the present invention to be used in the continuous flow process, a conductivity of 0.5 to 25 mS/m can be set by adding an electrolyte. Useful electrolytes include for example lithium nitrate and potassium nitrate. The inks of the present invention may include organic solvents at a total level of 1 to 50 % and preferably 5 to 30 % by weight. Suitable organic solvents are for example alcohols, for example methanol, ethanol, 1-propanol, isopropanol, 1-butanol, tert-butanol, pentyl alcohol, polyhydric alcohols for example: 1,2-ethanediol, 1,2,3-propanetriol, butanediol, 1,3-butanediol, 1,4-butanediol, 1,2-propanediol, 2,3-propanediol, pentanediol, 1,4-pentanediol, 1,5-pentanediol, hexanediol, D,L-1,2-hexanediol, 1,6-hexanediol, 1,2,6-hexanetriol, 1,2-octanediol, polyalkylene glycols, for example: polyethylene glycol, polypropylene glycol, alkylene glycols having 1 to 8 alkylene groups, for example: monoethylene glycol, diethylene glycol, triethylene glycol, tetraethylene glycol, thioglycol, thiodiglycol, butyltriglycol, hexylene glycol, propylene glycol, dipropylene glycol, tripropylene glycol, low alkyl ethers of polyhydric alcohols, for example: ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol monohexyl ether, triethylene glycol monomethyl ether, triethylene glycol monobutyl ether, tripropylene glycol monomethyl ether, tetraethylene glycol monomethyl ether, tetraethylene glycol monobutyl ether, tetraethylene glycol dimethyl ether, propylene glycol monomethyl ether, propylene glycol monoethyl ether, propylene glycol monobutyl ether, tripropylene glycol isopropyl ether, polyalkylene glycol ethers, such as for example: polyethylene glycol monomethyl ether, polypropylene glycol glycerol ether, polyethylene glycol tridecyl ether, polyethylene glycol nonylphenyl ether, amines, such as for example: methylamine, ethylamine, triethylamine, diethylamine, dimethylamine, trimethylamine, dibutylamine, diethanolamine, triethanolamine, N-acetylethanolamine, N-formylethanolamine, ethylenediamine, urea derivatives, such as for example: urea, thiourea, N-methylurea, N,N'-epsilon dimethylurea, ethyleneurea, 1,1,3,3-tetramethylurea, amides, such as for example: dimethylformamide, dimethylacetamide, acetamide, ketones or keto alcohols, such as for example: acetone, diacetone alcohol, cyclic ethers, such as for example: tetrahydrofuran, trimethylolethane, trimethylolpropane, 2-butoxyethanol, benzyl alcohol, 2-butoxyethanol, gamma butyrolactone, epsilon-caprolactam, further sulfolane, dimethylsulfolane, methylsulfolane, 2,4-dimethylsulfolane, dimethyl sulfone, butadiene sulfone, dimethyl sulfoxide, dibutyl sulfoxide, N-cyclohexylpyrrolidone, N-methyl-2-pyrrolidone, N-ethylpyrrolidone, 2-pyrrolidone, 1-(2-hydroxyethyl)-2-pyrrolidone, 1-(3-hydroxypropyl)-2-pyrrolidone, 1,3-dimethyl-2-imidazolidinone, 1,3-dimethyl-2-imidazolinone, 1,3-bismethoxymethylimidazolidine, 2-(2-methoxyethoxy)ethanol, 2-(2-ethoxyethoxy)ethanol, 2-(2-butoxyethoxy)ethanol, 2-(2-propoxyethoxy)ethanol, pyridine, piperidine, butyrolactone, trimethylpropane, 1,2-dimethoxypropane, dioxane ethyl acetate, ethylenediaminetetraacetate ethyl pentyl ether, 1,2-dimethoxypropane and trimethylpropane.
The inks of the invention may further comprise customary additives, for example viscosity moderators to set viscosities in the range from 0.5 to 40.0 mPas in a temperature range from 20 to 50 °C. Preferred inks have a viscosity of 1.0 to 20 mPas and particularly preferred inks have a viscosity of 1.5 to 15 mPas.

Useful viscosity moderators include rheological additives, for example: polyvinylcaprolactam, polyvinylpyrrolidone and their copolymers polyetherpolyol, associative thickeners, polyurea, polyurethane, sodium alginates, modified galactomannans, polyetherurea, polyurethane, nonionic cellulose ethers.

As further additives the inks of the invention may include surface-active substances to set surface tensions of 20 to 65 mN/m, which are adapted if necessary as a function of the process used (thermal or piezo technology). Useful surface-active substances include for example all surfactants, preferably nonionic surfactants, butyldiglycol and 1,2-hexanediol.

The inks of the present invention may further include customary additives, for example substances to inhibit fungal and bacterial growth in amounts from 0.01 to 1 % by weight based on the total weight of the ink.

The inks may be prepared in a conventional manner by mixing the components in water.

The inks of the present invention are particularly useful in inkjet printing processes for printing a wide variety of materials, in particular of wool and polyamide fibers.

The examples below serve to illustrate the invention. Parts and percentages are by weigh unless noted otherwise. The relationship between parts by weight and parts by volume is that of the kilogram to the liter.

### Example 1

10.06 g of 5,5'-Diamino-2,2'-ureylene-bis-benzenesulfonic acid were first dissolved in water at slightly acidic pH to give a complete solution. Ice was added to the solution and when the temperature reached 10 to 15 °C, 10.6 ml of 5N of sodium nitrite solution were added dropwise. The reaction mixture was further cooled down to 0 to 8 °C when the mixture was added dropwise into 12.38 g of concentrated HCl with 12 g of ice. A yellow suspension was formed and the reaction mixture was completed within an hour.

6.30 g of 2,5-Dimethyl-phenylamine were added directly into the diazo suspension and stirred. A violet precipitate was observed upon addition. The intermediate precipitate, 4,4'-Bis-(4-amino-2,5-dimethyl-phenylazo)-biphenyl-2,2'-disulfonic acid obtained was filtered off with suction and washed with organic solvent and dried.

15.22 g of the dried intermediate, 5,5'-Bis-(4-amino-2,5-dimethyl-phenylazo)-2,2'-ureylene-bis-benzenesulfonic acid, were then dissolved in water at slightly acidic pH to give a complete reddish orange solution. Ice was added to the solution and when the temperature reached 10 to 15 °C, 10.1 ml of 5N of sodium nitrite solution were added dropwise. The reaction mixture was further cooled down to 0 to 8 °C when the mixture was added dropwise into concentrated HCl with ice. A violet suspension was formed and the reaction mixture was completed in 90 mins.

The obtained reaction mixture was used in the next step as described below: 5-Methyl-2-phenyl-2H-pyrazol-3-ol was stirred in methanol and adjusted to slightly acidic. The obtained violet suspension was added dropwise into the methanol solution and stirred. Brilliant orange precipitate was observed upon addition. Precipitate obtained was filtered off with suction and washed with brine giving product of the formula 1a⁴¹. The analytic data are consistent with the assigned structure for product 1a⁴¹.

The product dyes the targeted fibre materials in brilliant orange shades.

Through analogy, all the dyes of formulae (1a¹-1a³¹²) can be synthesized according to the method described above.

### Dyeing example 1

1 part of the dye 1a⁴¹ of this invention was dissolved in 2000 parts of water and 1 part of levelling assistant (based on condensation product of a higher aliphatic amine and ethylene oxide) and 6 parts of sodium acetate were added. The pH was then adjusted to 5 using acetic acid (80 %ic). The dyebath was heated to 50 °C for 10 minutes and then entered with 100 parts of a woven polyamide-6 fabric. The temperature was raised to 98 °C over the course of 50 minutes and then dyeing was carried out at this temperature for 60 minutes. This was followed by cooling to 60 °C and removal of the dyed material. The polyamide-6 fabric was washed with hot and cold water, soaped and then spun and dried.

The orange dyeings obtained have very good light and wet fastness and also good levelness in the fibre.

### Dyeing example 2

1 part of the dye 1a⁴¹ of this invention was dissolved in 2000 parts of water and 1 part of levelling assistant (based on condensation product of a higher aliphatic amine and ethylene oxide) and 6 parts of sodium acetate were added. The pH was then adjusted to 5.5 using acetic acid (80 %ic). The dyebath was heated to 50 °C for 10 minutes and then entered with 100 parts of a woven polyamide-6,6 fabric. The temperature was raised to 120 °C over the course of 50 minutes and then dyeing was carried out at this temperature for 60 minutes. This was followed by cooling to 60 °C and removal of the dyed material. The polyamide-6,6 fabric was washed with hot and cold water, soaped and then spun and dried.

The orange dyeings obtained have very good light and wet fastness and also good levelness in the fibre.

### Dyeing example 3

100 parts of polyamide-6 material were padded with a 1000 parts 50 °C liquor solution that consists of 40 parts of the dye 1a⁴¹, 100 parts of urea, 20 parts of a non ionic solubilizer based on butyldiglycol, 20 parts of acetic acid to adjust the pH to 4.0, 10 parts of levelling assistant (based on ethoxylated aminopropyl fatty acid amide) and 810 parts of water. The material was rolled up and placed into a steaming chamber at 85 to 98 °C for 3 to 6 hours. After fixation, the fabric was washed with hot and cold water, soaped and then spun and dried.

The orange dyeings obtained have very good light and wet fastness and also good levelness in the fibre.

### Dyeing example 4

1 part of the dye 1a⁴¹ of this invention was dissolved in 2000 parts of water and 5 parts of sodium sulphate, and 1 part of levelling assistant (based on condensation product of a higher aliphatic amine and ethylene oxide) and 5 parts of sodium acetate were added. The pH was then adjusted to 4.5 using acetic acid (80 %ic). The dyebath was heated to 50 °C for 10 minutes and then entered with 100 parts of a woven wool fabric. The temperature was raised to 100 °C over the course of 50 minutes and then dyeing was carried out at this temperature for 60 minutes. This was followed by cooling to 90 °C and removal of the dyed material. The wool fabric was washed with hot and cold water, soaped and then spun and dried.

The orange dyeings obtained have very good light and wet fastness and also good levelness in the fibre.

### Dyeing example 5

1 part of the dye 1a⁴¹ of this invention was dissolved in 1000 parts of soft water and 7.5 parts of sodium sulphate, and 1 part of a wetting agent (anionic) was added. 100 parts of bleached cotton knitted fabric were added to this solution. The dye bath was then heated up to 98 °C with a gradient of 2 °C/min then dyeing was carried out at this temperature for 60 minutes. This was followed by cooling down to 80 °C. At 80 °C the dyeing was continued for another 20 minutes. The dyed material was then removed and was washed with hot and cold water, soaped and then spun and dried.

The orange dyeings obtained have very good light and wet fastness and also good levelness in the fibre.

### Dyeing example 6

3 parts of the dye 1a⁴¹ of this invention dissolved in 82 parts of deionized water were added into the dyebath with 15 parts of diethylene glycol at 60 °C. On cooling, a yellow printing ink was obtained.

The orange printing ink can be used for ink jet printing on paper, polyamide or wool textiles.

### Dyeing example 7

4 parts of chemically bleached (pine wood) sulphite pulp were mixed up with 100 parts of 55 °C water. 1 part of the dye 1a⁴¹ of this invention was dissolved in 100 parts of hot water. 80 parts of this solution were given to the mixed-up pulp and mixed for 2 minutes. After that the mixture was sized with resin size in a conventional manner and mixed for another 2 minutes. 55 parts of this solution were then diluted with 2000 parts of cold water and the paper was produced out of this solution.

The orange paper produced from the mixture has good wet fastnesses.

## Claims

1. Dyes of formula (1) 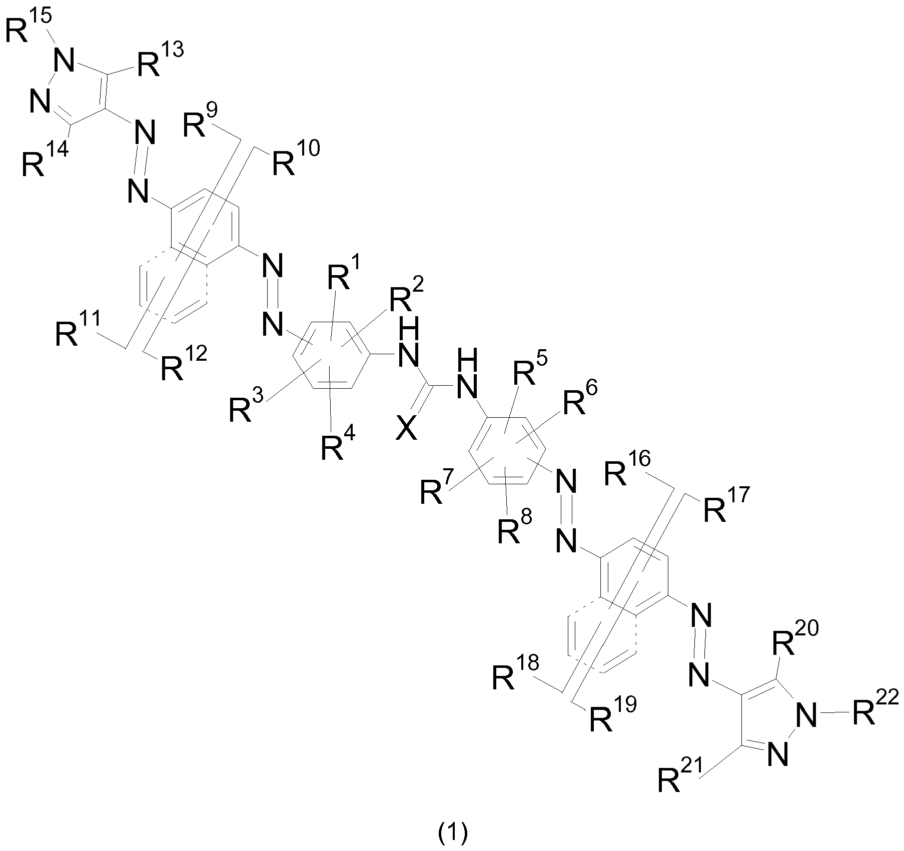 wherein
R¹, R², R³, R⁴, R⁵, R⁶, R⁷ and R⁸ independent of each other is hydrogen, alkyl, alkoxy, halogen, trifluoromethyl or SO₃M
- whereby at least two of them are SO₃M,
X is oxygen, sulphur or nitrogen,
R⁹, R¹⁰, R¹¹, R¹², R¹⁶, R¹⁷, R¹⁸, R¹⁹ independent of each other is hydrogen, alkyl, substituted alkyl, alkyl interrupted by one or two heteroatoms, alkoxy, substituted alkoxy, halogen, trifluoromethyl, cycloalkyl, heterocycloalkyl, cyano, acyloxy, alkylcarbonyl, acylamino, alkylsulfonylamino, amino, monoalkyl-amino, monocycloalkyl-amino, dialkyl-amino, di(cyclo)alkyl-amino, alkylthio, alkylsulfonyl, alkoxycarbonyl, carbamoyl, sulfamoyl, ureido, alkylureido or -SO₃M,
R¹³ and R²⁰ is hydroxyl,
R¹⁴ and R²¹ independent of each other is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio, alkylcarbonyl, alkylsulfonyl
or
is alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido and phenylureido,
R¹⁵ and R²² independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyalkylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl
or
alkyl interrupted by one or more heteroatoms,
or
alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
alkyl interrupted by one or more heteroatoms and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
aryl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M,
M is hydrogen, an alkali metal, ammonium, one equivalent of an alkali earth metal, or a monovalent organic cation
and
the dyes of formula (1) have two to six sulfonic acid groups.

2. Dyes according to claim 1 having formula (1 a) 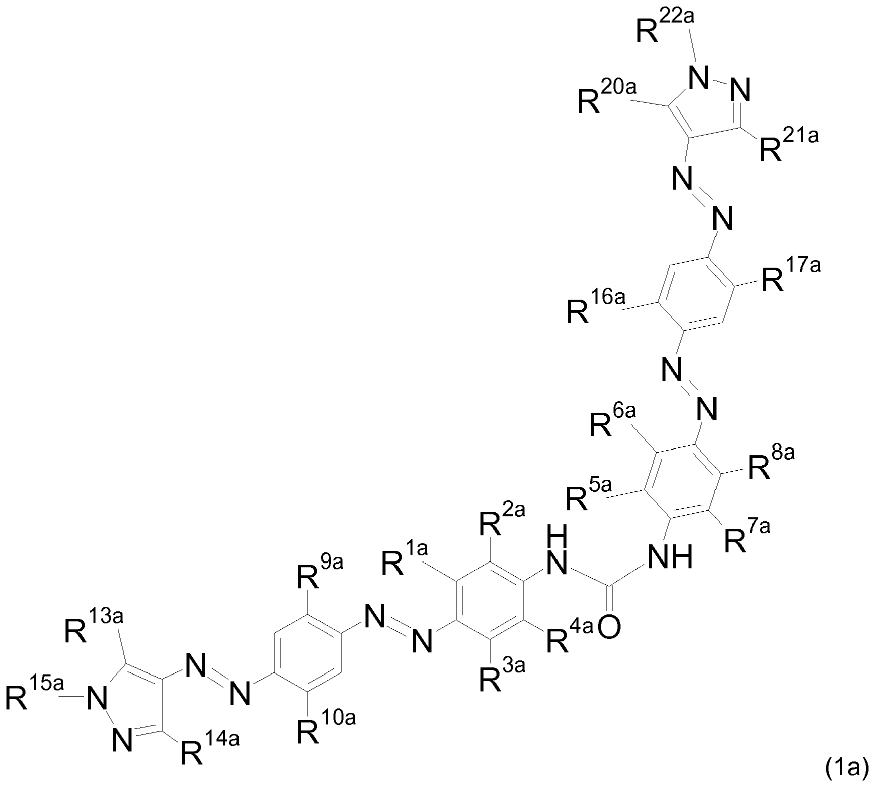 wherein
R^{1a}, R^{2a}, R^{3a}, R^{4a} , R^{5a} , R^{6a} , R^{7a} and R^{8a} independent of each other is hydrogen, alkyl, alkoxy, halogen, trifluoromethyl or SO₃M
- whereby at least two of them are SO₃M,
R^{9a}, R^{10a}, R^{16a} and R^{17a} independent of each other is hydrogen, alkyl, substituted alkyl, alkyl chain interrupted by one or two heteroatoms, alkoxy, substituted alkoxy, halogen, trifluoromethyl, cycloalkyl, heterocycloalkyl, cyano, acyloxy, alkylcarbonyl, acylamino, alkylsulfonylamino, amino, monoalkyl-amino, monocycloalkyl-amino, dialkyl-amino, di(cyclo)alkyl-amino, alkylthio, alkylsulfonyl, alkoxycarbonyl, carbamoyl, sulfamoyl, ureido, alkylureido or -SO₃M,
R^{13a} and R^{20a} is hydroxyl,
R^{14a} and R^{21a} independent of each other is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio, alkylcarbonyl, alkylsulfonyl
or
is alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido and phenylureido,
R^{15a} and R^{22a} independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl
or
alkyl interrupted by one or more heteroatoms
or
alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
alkyl interrupted by one or more heteroatoms and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
aryl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
and
M is hydrogen, an alkali metal, ammonium, one equivalent of an alkali earth metal, or a monovalent organic cation.

3. Dyes according to claim 2, wherein
R^{1a} and R^{6a} is SO₃M and R^{2a}, R^{3a}, R^{4a} and R^{5a} is hydrogen or
R^{2a} and R^{5a} is SO₃M and R^{1a}, R^{3a}, R^{4a} and R^{6a} is hydrogen,
R^{9a}, R^{10a}, R^{16a} and R^{17a} independent of each other is hydrogen, (C₁-C₄)-alkyl, (C₁-C₄)-alkoxy, halogen, trifluoromethyl, (C₁-C₄)-acylamino or -SO₃M,
R^{13a} and R^{20a} is hydroxyl,
R^{14a} and R^{21a} independent of each other is alkyl, cycloalkyl, trifluoromethyl, cyano, carbamoyl, alkoxycarbonyl, COOM, alkylcarbonyl or
is alkyl substituted by one or more substituents selected from the group consisting of hydroxy, alkoxy, halogen, cyano, COOM, alkoxycarbonyl, acyloxy and carbamoyl,
R^{15a} and R^{22a} independent of each other is methyl, ethyl, n-propyl, n-butyl, n-pentyl, n-hexyl, cyclobutyl, cyclopentyl, cyclohexyl, 2-methylcyclohexyl, 3-methylcyclohexyl, isopropyl, sec-butyl, 2-methylbutyl, 1-ethylproyl, 1,2-dimethylpropyl, tert-butyl, 3-methylbutyl, pentan-2-yl, 2-ethylhexyl, 2,2-dimethylpropyl, phenyl, benzyl, 2-hydroxyethyl, 2-methoxyethyl, 3-methoxypropyl, 2-fluoroethyl, 2-chloroethyl, 3-chloropropyl, 2-ethylhexyl, 2-(2-hydroxyethylsulfanyl)-ethyl, 4-(2-hydroxyethanesulfonyl)phenyl, 2-(2-hydroxyethoxy)ethyl, 3-(4-hydroxybutoxy)propyl, 3-(2-phenoxy-ethoxy)-propyl, 3-isopropoxy-propyl, 3-ethoxy-propyl, 3-ethoxybutyl, phenyl, 3-methylphenyl, 2-methylphenyl, 3-methylphenyl, 4-methylphenyl, 2-methoxyphenyl, 3-methoxyphenyl, 4-methoxyphenyl, 2-chlorophenyl, 3-chlorophenyl, 4-chlorophenyl, 2-fluorophenyl, 3-fluorophenyl, 4-fluorophenyl or 3-phenylsulfonamide
and
M is hydrogen, an alkali metal, ammonium, one equivalent of an alkali earth metal or a monovalent organic cation.

4. Process for the production of dyes according to claim 1 and mixtures thereof comprising
a) diazotization of a compound of formula (2) 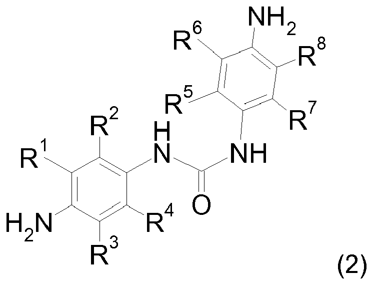 wherein R¹ to R⁸ are defined as in claim 1,
b) reacting the diazonium salt obtained in a) with compounds of formula (3) and (4) in stoichiometric amounts 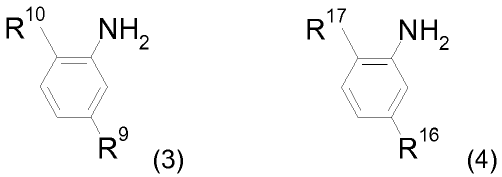 wherein R⁹, R¹⁰ and R¹⁶ , R¹⁷ are defined as in claim 1, to give an intermediate of formula (5) 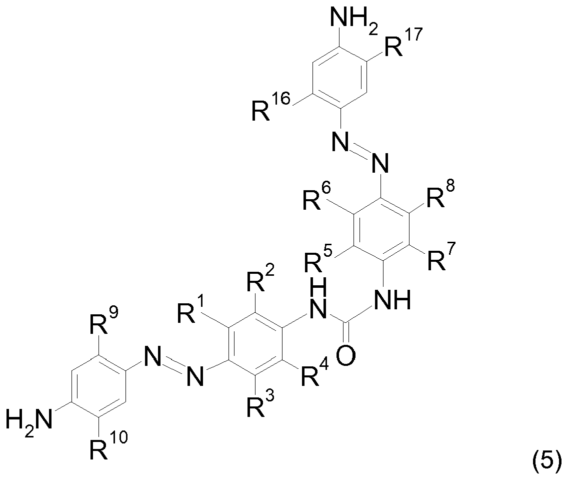
c) diazotizing the intermediate of formula (5) and
d) reacting the diazonium salt(s) obtained in c) with compounds of formula (6) and (7) or mixtures thereof in stoichiometric amounts 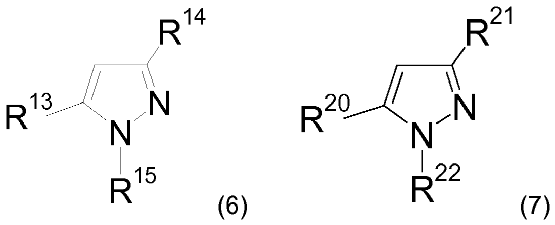 wherein R¹³ to R²² are defined as in claim 1.

5. Process for dyeing and printing of natural, manufactured regenerated, modified or synthetic hydroxyl- amino-, and/or carboxamido-containing fiber materials and their blends with dyes according to any of claims 1 to 3.

6. Aqueous inks for digital printing, comprising a dye according to any of claims 1 to 3.
